# EUROPEAN PATENT APPLICATION

(11) **EP 2 360 671 A1**
(43) Date of publication of application: **24.08.2011**
(21) Application number: 11150630.9
(22) Date of filing: 11.01.2011
(51) Int. Cl.: G09G 3/36, G02F 1/1335, G02F 1/1362

(54) **Liquid crystal display and method of driving the same**

(30) Priority: 11.02.2010 KR 20100012753
(71) Applicant: Samsung Mobile Display Co., Ltd., Yongin-city, Gyunggi-do 446-711 (KR)
(72) Inventor: Lee, Myung-Woo, Chungcheongnam-do (KR); Moon, Jun-Hee, Chungcheongnam-do (KR); Kim, Cheol-Min, Chungcheongnam-do (KR); Kim, Soon-Dong, Chungcheongnam-do (KR)
(74) Representative: Walaski, Jan Filip

(57) **Abstract**

There is provided a liquid crystal display for minimizing power consumption. The liquid crystal display includes transmission regions formed in a liquid crystal panel in units of horizontal lines, reflection regions positioned between the transmission regions, first sub pixels formed in the transmission regions, and second sub pixels formed in the reflection regions. A total number of the second sub pixels is smaller than a total number of the first sub pixels.

## Description

The present invention relates to a liquid crystal display and a method of driving the same, and more particularly, to a liquid crystal display for minimizing power consumption and a method of driving the same.

A liquid crystal display controls light transmittance of liquid crystal cells in accordance with data signals to display an image. The liquid crystal display includes a liquid crystal panel having sub pixels arranged in a matrix and having a driving circuit driving the liquid crystal panel.

The liquid crystal panel includes the sub pixels arranged at intersections between scan lines and data lines. Pixel electrodes and a common electrode applying an electric field are provided in each of the sub pixels. Each of the pixel electrodes is coupled to one of the data lines via a thin film transistor (TFT). The TFT is a switching element included in each of the sub pixels. The gate terminal of the TFT is coupled to one of the scan lines so that data signals are applied to the sub pixels by one line.

The driving circuit includes a scan driver driving the scan lines, a data driver driving the data lines, and a common voltage generator driving the common electrode. The scan driver sequentially supplies scan signals to the scan lines in order to sequentially select the sub pixels on the liquid crystal panel by one line. The data driver supplies the data signals to the data lines whenever the scan signals are supplied to the scan lines. The common voltage generator supplies a common voltage signal to the common electrode. Therefore, in the liquid crystal display, the arrangement state of liquid crystal between the pixel electrode and the common electrode changes in each sub pixel in accordance with a data signal so that light transmittance is controlled and that an image is displayed.

The liquid crystal display is widely used in portable apparatuses such as a mobile telephone, a portable personal computer, or other similar electronic devices. The capacity of a battery used as a power source in the portable apparatus is limited. Therefore, in order to use the portable apparatus for a long time, research on minimizing power consumption of the liquid crystal display is being conducted.

For example, in order to minimize the power consumption of the liquid crystal display, a method of displaying a still image on a part of the liquid crystal panel when the liquid crystal display operates in a standby mode is used. However, when a part of the liquid crystal is used to display the still image enough information may not be displayed. In addition, in order to display a still image in a standby mode, a driving voltage and driving signals are supplied to the liquid crystal panel, and thus, there are limitations on reducing power consumption.

Aspects of the present invention provide a liquid crystal display for minimizing power consumption and a method of driving the same.

According to an aspect of the present invention, there is provided a liquid crystal display, including transmission regions formed in a liquid crystal panel in units of horizontal lines, reflection regions positioned between the transmission regions, first sub pixels formed in the transmission regions, and second sub pixels formed in the reflection regions. A total number of the second sub pixels is smaller than a total number of the first sub pixels.

According to another aspect of the present invention, pixels each include three first sub pixels, respectively radiating red, green, and blue, and the total number of the second sub pixels is the same as a total number of the pixels. Pixels each include three first sub pixels radiating red, green, and blue and each of the second sub pixels are formed adjacent to a respective one of the pixels along a first direction.

According to another aspect of the present invention, the liquid crystal display further includes first scan lines coupled to the first sub pixels, second scan lines coupled to the second sub pixels, and data lines intersecting the first scan lines to be coupled to the first sub pixels. The liquid crystal display further includes a first scan driver sequentially supplying first scan signals to the first scan lines, a second scan driver sequentially supplying second scan signals to the second scan lines, a data driver supplying first data signals to the first sub pixels in synchronization with the first scan signals or supplying second data signals to the second sub pixels in synchronization with the second scan signals, a timing controller controlling the first scan driver, the second scan driver, and the data driver and supplying first data corresponding to the first data signals or second data corresponding to the second data signal to the data driver.

According to another aspect of the present invention, each of the second sub pixels includes a thin film transistor (TFT) turned on when the second scan signal is supplied to a respective one of the second sub pixels, a liquid crystal cell formed between a pixel electrode coupled to the TFT and a common electrode positioned to face the pixel electrode, and a memory coupled to a first node that is a common node between the TFT and the pixel electrode in order to store a voltage corresponding to the second data signal. The memory includes a first transistor coupled between the first node and a second node and turned on when a first polarity control signal is supplied, a second transistor coupled between the first node and a third node and turned on when a second polarity control signal is supplied, and a first inverter and a second inverter coupled to each other in parallel so that current flows in opposite directions between the second node and the third node.

According to an aspect of the present invention, there is provided a method of driving a liquid crystal display in which first sub pixels are formed in transmission regions and second sub pixels are formed in reflection regions positioned adjacent to the transmission regions in units of horizontal lines includes supplying second data signals corresponding to black to the second sub pixels when a power source is applied, displaying a predetermined image while supplying first data signals to the first sub pixels, supplying second data signals corresponding to a predetermined still image to the second sub pixels so that the predetermined still image is displayed by the second sub pixels when the liquid crystal display is driven in a standby mode, and displaying the still image corresponding to the second data signals by the second sub pixels.

According to another aspect of the present invention, supply of power driving the first sub pixels is blocked in the standby mode having an image is displayed by the second sub pixels. The method further includes updating the still image displayed by the second sub pixels while supplying the second data signals in the standby mode. The method further includes supplying the first data signals corresponding to black to the first sub pixels before the second data signals are supplied to the second sub pixels.

In the liquid crystal display according to aspects of the present invention and the method of driving the same, a power source driving first sub pixels is blocked in the standby mode so that power consumption may be minimized. In addition, according to aspects of the present invention, the inversion rate of second sub pixels is set to be no less than 2Hz in the standby mode so that power consumption may be additionally reduced.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
FIG. 1 is a view illustrating a liquid crystal display according to an embodiment of the present invention;
FIG. 2 is a view illustrating a second sub pixel of FIG. 1;
FIGs. 3A to 3C are waveform diagrams illustrating a method of driving the liquid crystal display according to an embodiment of the present invention;
FIG. 4 is a flowchart illustrating a method of driving a liquid crystal display according to another embodiment of the present invention; and
FIG. 5 is a flowchart illustrating a method of driving a liquid crystal display according to another embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

It is to be understood that where is stated herein that a first element is said to be disposed or formed "on" or "in", "connected to", "coupled to" or "adjacent to", a second element, the first element can directly contact the second element, or can be separated from the second element by one or more other elements located therebetween. In contrast, when an element is referred to as being disposed or formed "directly on" or "directly connected to" another element, there are no intervening elements present.

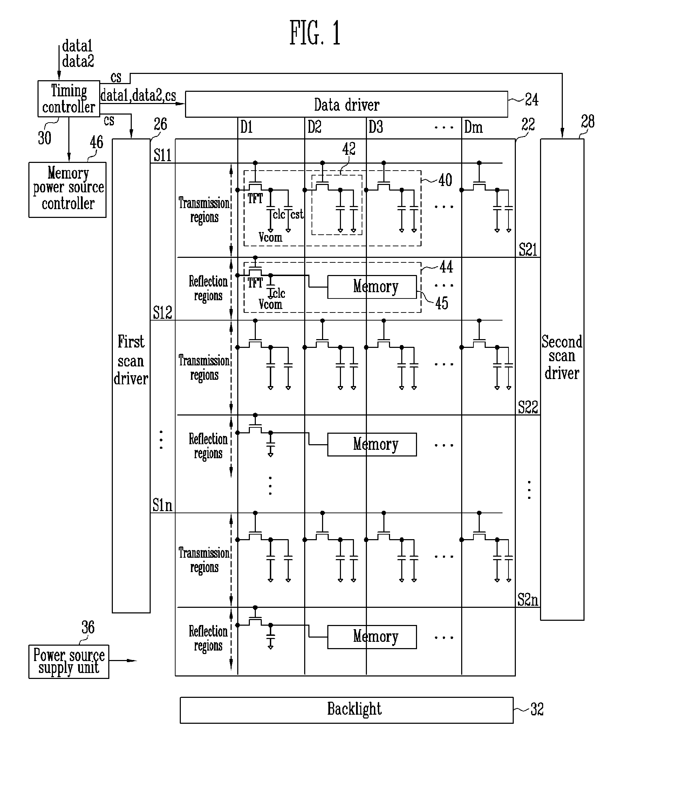

FIG. 1 is a view illustrating a liquid crystal display according to an embodiment of the present invention. Referring to FIG. 1, the liquid crystal display, according to the present embodiment of the present invention, includes a liquid crystal panel 22, a data driver 24 supplying data signals to data lines D1 to Dm, a first scan driver 26 sequentially supplying first scan signals to first scan lines S11 to S1n, a second scan driver 28 sequentially supplying second scan signals to second scan lines S21 to S2n, a timing controller 30 controlling the first scan driver 26, the second scan driver 28, and the data driver 24, a power source supply unit 36 generating voltages supplied to the liquid crystal panel 22, a backlight 32 generating light, and a memory power source controller 46 controlling power supplied to a memory 45.

The timing controller 30 receives synchronizing signals, such as vertical synchronizing signals, horizontal synchronizing signals, and dot clocks, from the outside, first data data 1, and second data data2. The timing controller 30, having received the synchronizing signals, generates a control signal CS controlling the first scan driver 26, the second scan driver 28, and the data driver 24. In addition, the timing controller 30 realigns the first data data 1 and the second data data2 input thereto and supplies the first data data 1 and the second data data2 to the data driver 24. The first data data 1 are supplied in a normal mode displaying a common image and the second data data2 are supplied in a standby mode displaying minimum information, such as a still image, on the liquid crystal display.

The data driver 24, in response to the control signal CS from the timing controller 30, generates first data signals corresponding to the first data data 1 or second data signals corresponding to the second data data2. The generated first data signals or second data signals are supplied to the data lines D1 to Dm. The first data signals are set as voltages corresponding to various gray scales so that a moving picture is displayed. The second data signals are set as a high or low voltage so that a still image is displayed.

The first scan driver 26 sequentially supplies the first scan signals to the first scan lines S11 to S1n in response to the control signal CS from the timing controller 30. In this case, the pixels 40 positioned in the transmission regions of the liquid crystal panel 22 receive the first data signal while being sequentially selected in units of horizontal lines. The second scan driver 28 sequentially supplies the second scan signals to the second scan lines S21 to S2n in response to the control signal CS from the timing controller 30. In this case, the sub pixels 44 positioned in the reflection region of the liquid crystal panel 22 receive the second data signals while being sequentially selected in units of horizontal lines.

The power source supply unit 36 generates a voltage supplied to the liquid crystal panel 22. For example, the power source supply unit 36 generates a gate high voltage VGH, a gate low voltage VGL, a common voltage Vcom, and a power source voltage VDD.

The memory power source controller 46 generates a first polarity control signal POL1 and a second polarity control signal POL2 using the gate high voltage VGH and the gate low voltage VGL supplied from the power source supply unit 36. The memory power source controller 46 supplies the generated first polarity control signal POL1 and second polarity control signal POL2 to the memory 45. The memory power source controller 46 is illustrated in FIG. 1 to be additionally formed outside the liquid crystal panel 22. However, aspects of the present invention are not limited to the above and the memory power source controller 46 may be provided in the second scan driver 28.

The backlight 32 is positioned to overlap the liquid crystal panel 22 and supplies light to a front surface of the liquid crystal panel 22. The liquid crystal panel 22 includes first sub pixels 42 positioned in transmission regions and second sub pixels 44 positioned in reflection regions. The transmission regions and the reflection regions extend in a first direction which is horizontal, and are alternately positioned in a second direction, which is vertical.

The first sub pixels 42 positioned in the transmission regions receive a first data signal from respective ones of the data lines D1 to Dm when a first scan signal is supplied from respective ones of the first scan lines S11 to S1n. The first sub pixels 42 that received the first data signal display an image of a predetermined gray scale while controlling the transmission rate of the light supplied from the backlight 32 in order to display the image of the predetermined gray scale.

Therefore, the first sub pixel 42 includes a TFT positioned at an intersection between one of the first scan lines S11 to S1n and one of the data lines D1 to Dm and a liquid crystal cell Clc and a storage capacitor Cst coupled to the TFT. The TFT is turned on when the first scan signal is supplied to the one of the first scan lines S11 to S1n and supplies the first data signal from the one of the data lines D1 to Dm to the storage capacitor Cst.

The liquid crystal cell Clc irradiates liquid crystal between the pixel electrode coupled to the drain electrode of the TFT and the common electrode formed on the top substrate. The liquid crystal cell Clc displays a predetermined image while controlling the transmittance rate of light to correspond to the first data signal. The storage capacitor Cst maintains the voltage corresponding to the first data signal in one frame.

The first sub pixels 42 display various images, including a moving picture to correspond to the input of a user in a normal mode. Three first sub pixels 42 positioned in the transmission regions and displaying red, green, and blue constitute one pixel 40. The second sub pixel 44 disposed in the reflection region receives a second data signal from a data line (D1, D4, ..., and Dm-2) when a second scan signal is supplied from a second scan line (one of S21 to S2n). The second sub pixel 44 that receives the second data signal displays a predetermined image corresponding to the second data signal. The second sub pixels 44 display a still image including predetermined information in a standby mode.

The second sub pixel 44 includes a TFT positioned at an intersection between the second scan line (one of S21 to S2n) and the data line (one of D1, D4, ..., and Dm-2), a liquid crystal cell Clc coupled to the TFT, and the memory 45. The TFT is turned on when the second scan signal is supplied to the second scan line (one of S21 to S2n) and supplies the second data signal from the data line (one of D1, D4, ..., and Dm-2) to the liquid crystal cell Clc and the memory 45. The memory 45 stores a voltage corresponding to the second data signal. The memory 45 supplies the second data signal to the liquid crystal cell Clc while inverting the second data signal in the standby mode. Therefore, the memory is formed to have an SRAM structure.

According to an aspect of the present invention, a number of second sub pixels 44 included in the liquid crystal panel 22 is less than a number of first sub pixels 42. For example, one second sub pixel 44 is formed to correspond to one pixel 40, wherein the one pixel 40 includes three first sub pixels 42. In this case, the second sub pixel 44 is coupled to one of the three data lines coupled to the pixel 40. In another embodiment, one second sub pixel 44 is formed to correspond to two pixels 40 including six first sub pixels 42, the pixels 40 being horizontally adjacent to one another. In this case, the second sub pixel 44 is coupled to one of the six data lines coupled to the two pixels 40.

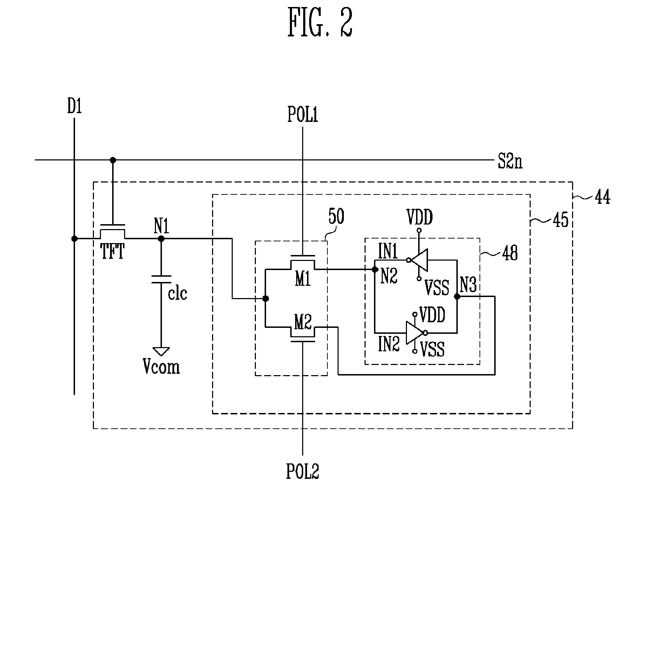

FIG. 2 is a view illustrating a second sub pixel of FIG. 1. In FIG. 2, for convenience, the second sub pixel coupled to the 2nth scan line S2n and the first data line D1. Referring to FIG. 2, the second sub pixel 44, according to the present embodiment of the present invention, includes a TFT, a liquid crystal cell Clc, and the memory 45.

The TFT is turned on when a second scan signal is supplied to an nth scan line S2n in order to supply the second data signal from the first data line D1 to a first node N1. The liquid crystal cell Clc irradiates liquid crystal between the pixel electrode coupled to the first node N1 and the common electrode formed on the top substrate. The memory 45 is coupled to the first node N1 and supplies a high or low voltage to the first node N1 corresponding to the second data signal. Therefore, the memory 45 includes a switching unit 50 and a storage unit 48.

The switching unit 50 includes a first transistor M1 and a second transistor M2. The first transistor M1 is formed between the first node N1 and a second node N2 and is turned on and off corresponding to the first polarity control signal POL1. The second transistor M2 is formed between the first node N1 and a third node N3 and is turned on and off corresponding to the second polarity control signal POL2.

The storage unit 48 includes two inverters IN1 and IN2 coupled between the second node N2 and the third node N3 in parallel. The first inverter IN1 is coupled so that current flows from the second transistor M2 to the first transistor M1 and the second inverter IN2 is coupled so that current flows from the first transistor M1 to the second transistor M2. In this case, the voltage corresponding to the second data signal supplied to the first node N1 may be stored by the first inverter IN1 and the second inverter IN2 coupled to each other in parallel.

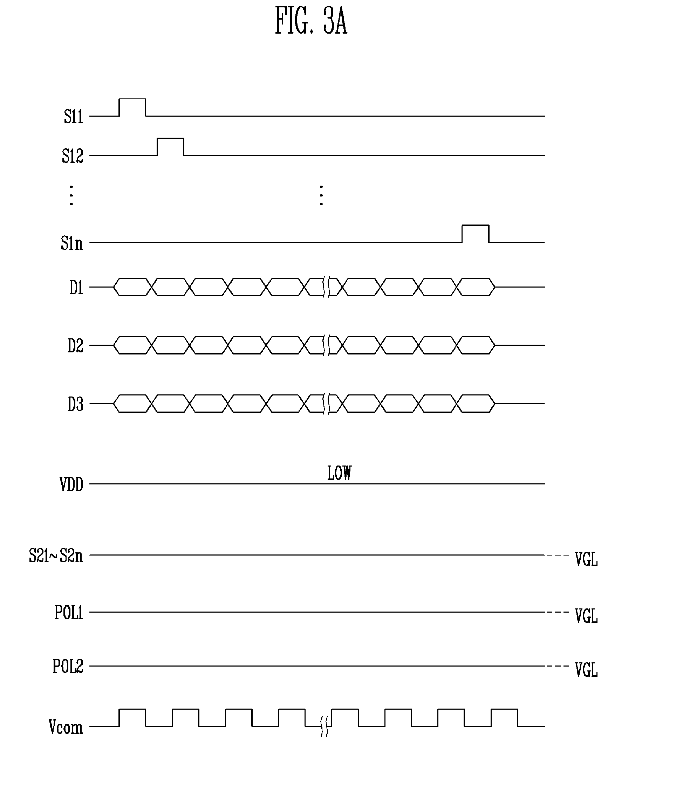

FIG. 3A is a waveform diagram illustrating driving waveforms supplied in a normal mode. Referring to FIG. 3A, in the normal mode, the first scan signals are sequentially supplied to the first scan lines S11 to S1n. The first data signals are supplied to the data lines D1 to Dm in synchronization with the first scan signals. In this case, a predetermined image is displayed on the liquid crystal panel 22 by the first sub pixels 42 positioned in the transmission regions.

The second sub pixels 44 positioned in the reflection region in the normal mode display a black image. Therefore, the liquid crystal display passes through a period (for example, a standby write mode) where the second data signals corresponding to black are supplied to the second sub pixels 44 before the normal mode.

Referring to FIG. 3A, in the normal mode, the power source voltage VDD, the first polarity control signal POL1, and the second polarity control signal POL2 are not supplied. Additionally, in the normal mode, the second scan signals are not supplied to the scan lines S21 to S2n. Therefore, in the normal mode, it is possible to prevent power from being unnecessarily consumed in the reflection region.

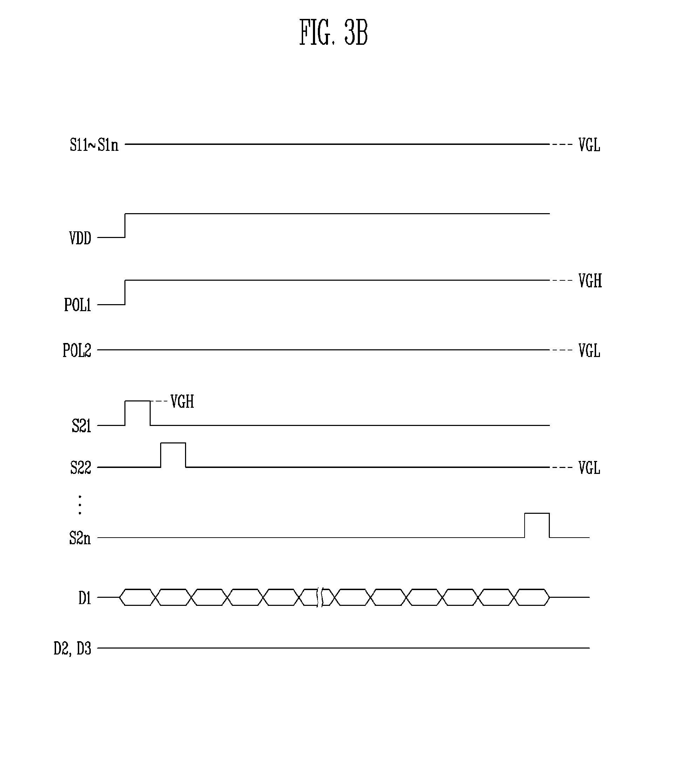

FIG. 3B is a waveform diagram illustrating driving waveforms supplied in the standby write mode. In the standby write mode occurring between the normal mode and the standby mode, the second data signals are supplied to the second sub pixels 44. The second scan signals are sequentially supplied to the second scan lines S21 to S2n. Then, the second data signals are supplied to the data lines (D1, D4, ..., and Dm-2) coupled to the second sub pixels 44. The second data signals include information corresponding to a predetermined still image to be displayed in the reflection region in the standby mode.

In the standby write mode, the first polarity control signal POL1 is supplied so that the first transistor M1 is turned on. When the first transistor M1 is turned on, the second signal supplied to the second sub pixel 44 is stored in the storage unit 48. For example, the second data signal of a low voltage (or a high voltage) supplied to the first node N1 of the second sub pixel 44 is supplied to the second node N2 via the first transistor M1. The second data signal of the low voltage (or the high voltage) is transited to a high voltage (or a low voltage) via the second inverter IN2 to be supplied to the third node N3. In addition, the high voltage (or low voltage) of the third node N3 is transited to a low voltage (or high voltage) via the first inverter IN1 to be supplied to the second node N2. Additionally, in the standby write mode, the power source voltage VDD is supplied so that the memory 45 may be normally driven and the scan signals are not supplied to the first scan lines S11 to S1n.

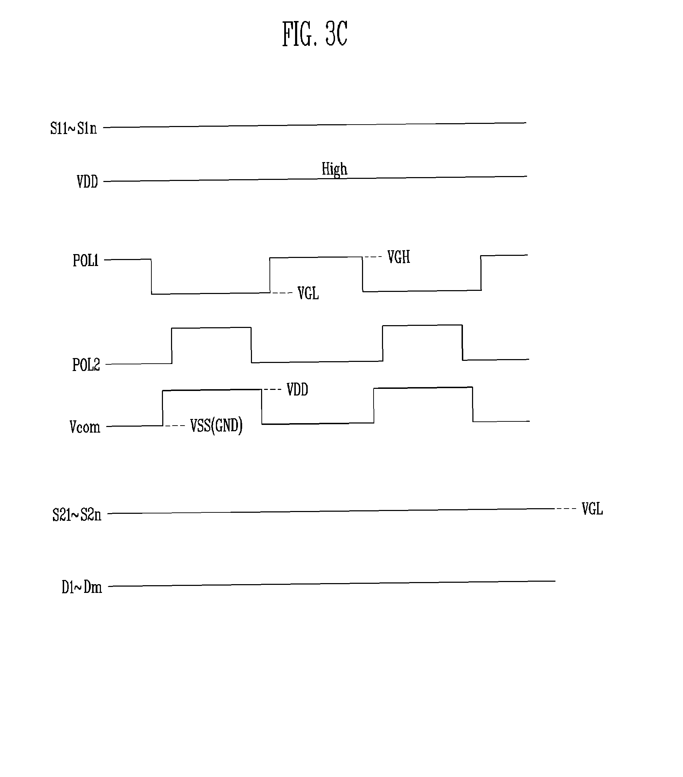

FIG. 3C is a waveform diagram illustrating driving waveforms supplied in a standby mode. Referring to FIG. 3C, in the standby mode, the supply of all of the power sources excluding the power source voltage VDD, the polarity control signals POL1 and POL2, the common voltage Vcom, the gate high voltage VGH, and the gate low voltage VGL is stopped. Therefore, in the standby mode, a power source is not supplied to the backlight 32 so that light is not generated from the backlight 32.

In the standby mode, the polarities of the first polarity control signal POL1 and the second polarity control signal POL2 are inverted in order to alternately turn on the first transistor M1 and the second transistor M2. The polarity of the common voltage Vcom is inverted to correspond to the first polarity control signal POL1 and the second polarity control signal POL2. In this case, the second sub pixel 44 is inversion driven to display a predetermined still image.

On the other hand, according to aspects of the present invention, the polarity of the common voltage Vcom is inverted after both the first polarity control signal POL1 and the second polarity control signal POL2 are set as a low voltage. That is, the voltage stored in the storage unit 48 is stably maintained only when the polarity of the common voltage Vcom is inverted after the first transistor M1 and the second transistor M2 are set as a turn-off state.

According to aspects of the present invention, the inversion rate of the first control signal POL1 and the second polarity control signal POL2 is set between 2Hz and 99Hz. As described above, when the polarity inversion frequency of the first polarity control signal POL1 and the second polarity control signal POL2 is set between 2Hz and 99Hz, power consumption may be minimized.

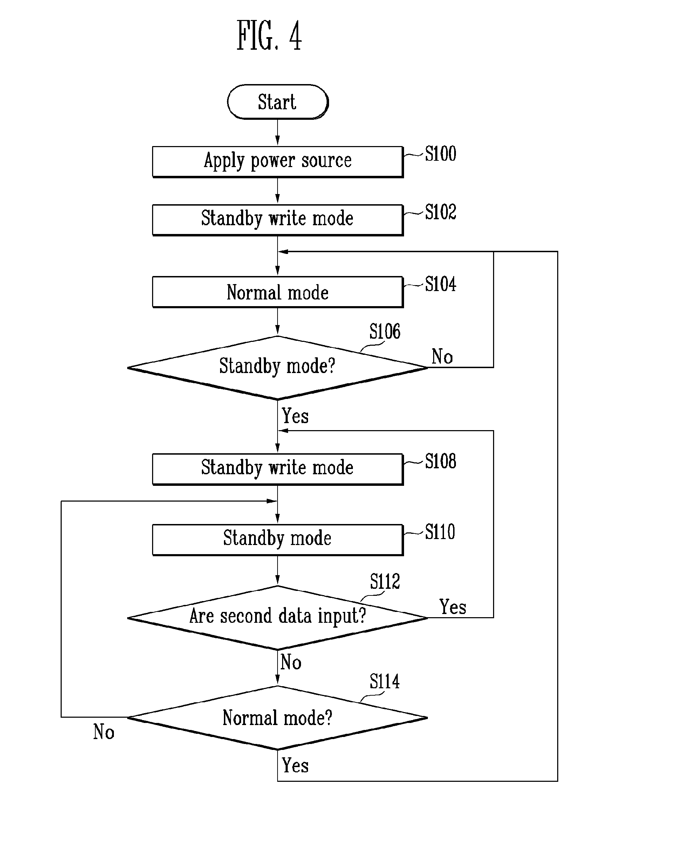

FIG. 4 is a flowchart illustrating a method of driving a liquid crystal display according to another embodiment of the present invention.

Referring to FIG. 4, a user applies a power source to a liquid crystal display as required in operation S100. After the power source is applied to the liquid crystal display, the second data signals corresponding to a black colour are supplied to the second sub pixels 44 in the standby write mode S102. Then, in the normal mode S104, a predetermined image is displayed on the liquid crystal panel 22 corresponding to the first data signals.

Additionally, in the operation S106, the liquid crystal display checks whether to be driven in a standby mode S110 while being driven in the normal mode S104. The liquid crystal display is driven in the standby mode S110 when the liquid crystal display satisfies a previously set condition. For example, the liquid crystal display is driven in the standby mode S110 when a predetermined signal is supplied from the user or a signal is not input from the user for a predetermined time.

In operation S106, when the liquid crystal display is not driven in the standby mode S110, normal mode S104 is repeated to display a predetermined image on the liquid crystal panel 22. When the liquid crystal display is driven in S106, the second data signals corresponding to a predetermined image are supplied to the second sub pixels 44 through the standby write mode S108.

Then, the liquid crystal display displays a predetermined still image while being driven in the standby mode S110. Next, the timing controller 30 checks whether the second data data2 are input from the outside S112. When the second data are input from the outside, the second data signals are supplied to the second sub pixels 44 so that the still image displayed on the liquid crystal panel 22 through the standby write mode S108 is updated. When the second data are not input from the outside in operation S112, it is determined whether the liquid crystal display is to be driven in the normal mode S114. For example, when a signal corresponding to a key input is input from the user, the liquid crystal display is driven in the normal mode S104.

In operation S114, when it is determined that the liquid crystal display is not driven in the normal mode S104, a still image is displayed on the liquid crystal panel 22 while repeating operations S110 to S114. In operation S114, when the liquid crystal display is driven in the normal mode S104, an image corresponding to the normal mode S104 is displayed on the liquid crystal panel 22.

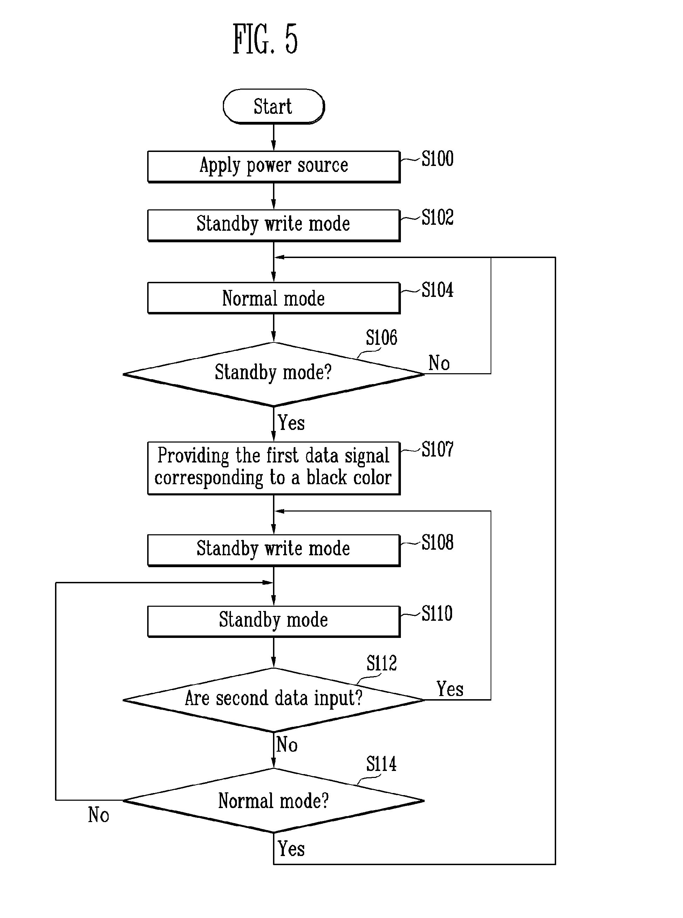

Referring to FIG. 5, operation S107 in the embodiment of FIG. 5 is different from the embodiment of FIG. 4. Operation S107, which is between operations S106 and S108, supplies the first data signals corresponding to a black colour to the first sub pixels 42.

In detail, since light is not generated by the backlight 32 in the standby mode, the first sub pixels 42 maintain a black state. However, a partial image may be displayed by the first sub pixels 42 in the standby write mode and, in order to prevent the partial image from being displayed, a step of supplying the first data signals corresponding to a black colour is added before the standby write mode.

Although a few embodiments of the present invention have been shown and described, it would be appreciated by those skilled in the art that changes may be made in this embodiment without departing from the principles of the invention, the scope of which is defined in the claims.

## Claims

1. A liquid crystal display, comprising:
transmission regions horizontally arranged in a liquid crystal panel;
reflection regions positioned between the transmission regions;
first sub pixels (42) formed in the transmission regions; and
second sub pixels (44) formed in the reflection regions,
wherein a total number of the second sub pixels is smaller than a total number of the first sub pixels.

2. The liquid crystal display as claimed in claim 1, wherein pixels (40) each include three first sub pixels, comprising red, green, and blue sub pixels, and
wherein the total number of the second sub pixels (44) is the same as a total number of the pixels and/or
wherein each of the second sub pixels (44) are formed adjacent to a respective one of the pixels in a vertical direction.

3. The liquid crystal display as claimed in claim 1 or 2, further comprising:
first scan lines coupled to the first sub pixels;
second scan lines coupled to the second sub pixels; and
data lines intersecting the first scan lines and coupled to the first sub pixels.

4. The light emitting display as claimed in claim 3,
wherein each of the second sub pixels (44) is coupled to one of the three data lines coupled to the first sub pixels (42) that constitute one of the pixels (40) or
wherein each of the second sub pixels are coupled to respective ones of the data lines coupled to the first sub pixels included in two adjacent pixels.

5. The liquid crystal display as claimed in claim 3 or 4, further comprising:
a first scan driver sequentially supplying first scan signals to the first scan lines;
a second scan driver sequentially supplying second scan signals to the second scan lines;
a data driver supplying first data signals to the first sub pixels in synchronization with the first scan signals or supplying second data signals to the second sub pixels in synchronization with the second scan signals;
a timing controller controlling the first scan driver, the second scan driver, and the data driver and supplying first data corresponding to the first data signals or second data corresponding to the second data signal to the data driver.

6. The liquid crystal display as claimed in claim 5, wherein each of the second sub pixels (44) comprises:
a thin film transistor (TFT) arranged to be turned on when the second scan signal is supplied to a respective one of the second sub pixels;
a liquid crystal cell formed between a pixel electrode coupled to the TFT and a common electrode positioned to face the pixel electrode; and
a memory coupled to a first node that is a common node between the TFT and the pixel electrode in order to store a voltage corresponding to the second data signal.

7. The liquid crystal display as claimed in claim 6, wherein the memory comprises:
a first transistor coupled between the first node and a second node and turned on when a first polarity control signal is supplied;
a second transistor coupled between the first node and a third node and turned on when a second polarity control signal is supplied; and
a first inverter and a second inverter coupled to each other in parallel so that current flows in opposite directions between the second node and the third node.

8. The liquid crystal display as claimed in claim 7, wherein, in a standby mode minimizing power consumption of the liquid crystal panel, the first polarity control signal and the second polarity control signal are supplied so that the first transistor and the second transistor are alternately turned on.

9. The liquid crystal display as claimed in claim 8,
wherein a polarity of a common voltage supplied to the common electrode is inverted in the standby mode, and
a polarity of the common voltage is inverted when both the first transistor and the second transistor are turned off.

10. The liquid crystal display as claimed in claim 8 or 9, wherein an inversion rate of the first polarity control signal and the second polarity control signal is in a range of 2Hz and 99Hz.

11. The liquid crystal display as claimed in any one of the preceding claims, wherein an image is displayed by the first sub pixels in a normal mode displaying a predetermined image on the liquid crystal panel and/or wherein an image is displayed by the second sub pixels in a standby mode minimizing power consumption of the liquid crystal panel.

12. The liquid crystal display as claimed in claim 11, wherein the second sub pixels display a black colour in the normal mode.

13. A method of driving a liquid crystal display in which first sub pixels are formed in transmission regions and second sub pixels are formed in reflection regions positioned adjacent to the transmission regions in units of horizontal lines, the method comprising:
supplying second data signals corresponding to black to the second sub pixels when a power source is applied;
displaying a predetermined image while supplying first data signals to the first sub pixels;
supplying second data signals corresponding to a predetermined still image to the second sub pixels so that the predetermined still image is displayed by the second sub pixels when the liquid crystal display is driven in a standby mode; and
displaying the still image corresponding to the second data signals by the second sub pixels.

14. The method as claimed in claim 13, wherein supply of power driving the first sub pixels is blocked in the standby mode in which an image is displayed by the second sub pixels.

15. The method as claimed in claim 13 or 14, further comprising updating the still image displayed by the second sub pixels while supplying the second data signals in the standby mode and/or further comprising supplying the first data signals corresponding to black to the first sub pixels before the second data signals are supplied to the second sub pixels.
